Europäisches Patentamt

European Patent Office

Office européen des brevets

(19)

(11) Publication number: **0 092 977**

**A1**

(12) **EUROPEAN PATENT APPLICATION**

(21) Application number: 83302265.0

(22) Date of filing: 21.04.83

(51) Int. Cl.³: **G 05 B 19/405**
**G 09 C 1/10**

(30) Priority: 22.04.82 JP 67723/82

(43) Date of publication of application:
02.11.83 Bulletin 83/44

(84) Designated Contracting States:
DE FR GB

(71) Applicant: FANUC LTD
5-1, Asahigaoka 3-chome Hino-shi
Tokyo 191(JP)

(72) Inventor: Nozawa, Ryoichiro
12-1-2105, Sarugaku-cho
Shibuya-ku Tokyo(JP)

(72) Inventor: Kawamura, Hideaki
1375-5, Narahara-cho
Hachioji-shi Tokyo(JP)

(72) Inventor: Miyata, Mitsuto
1768-149, Yugi Hachioji-shi
Tokyo(JP)

(74) Representative: Billington, Lawrence Emlyn et al,
HASELTINE LAKE & CO Hazlitt House 28 Southampton
Buildings Chancery Lane
London WC2A 1AT(GB)

(54) Numerical control method and apparatus.

(57) A robot control system wherein a subprogram or custom macro for execution of prescribed machining or processing is stored previously in a memory (15b), a call instruction for calling the subprogram or custom macro from the memory (15b) is inserted beforehand in a numerical control program, and numerical control processing is executed in accordance with the subprogram or custom macro called from memory (15b). When the subprogram or custom macro stored in the memory (15b) is desired to be delivered to an external output unit (20), the data are first enciphered by enciphering means (19b) to prevent their decoding by end users. When a subprogram or custom macro stored in an external storage medium (11) in enciphered form is desired to be registered in the memory (15b), the data are deciphered by deciphering means (13b) before being stored in the memory (15b).

./...

Fig. 5

## NUMERICAL CONTROL METHOD AND APPARATUS

This invention relates to a numerical control method and apparatus for executing numerical control through use of subprograms or custom macros.

A numerical control device (referred to as an NC device) generally executes numerical control processing on the basis of a command program specified by a paper tape or the like, and causes machining to be performed as commanded by driving a machine tool in accordance with the results of processing. This is referred to as the tape mode of operation.

Recent NC devices contain a processor (CPU), a control program memory and a data memory, and thus have the construction of a computer. They are so adapted that the processor executes predetermined numerical control processing on the basis of a control program and NC program to effect the control of a machine tool. In a computerized NC device of this kind, a widely adopted operating method is a so-called memory mode method of operation which facilitates editing such as NC program modification, addition and deletion, or which is useful in achieving processing at higher speeds. With the memory mode operating method, a variety of NC programs are stored beforehand in an internal memory and, in actual processing for machining control or the like, the processing is performed by reading a predetermined NC program out of the memory in successive fashion.

In instances where there is a fixed machining sequence or a shape produced by repeating the same pattern when carrying out machining in the above-described tape mode and memory mode operating methods, a system is available wherein the sequence or shape is stored in the memory beforehand as a subprogram, a call instruction for calling the subprogram is inserted in the NC program, and the subprogram is called whenever required to execute numerical control. Using the subprogram method is convenient since the NC program can be greatly simplified.

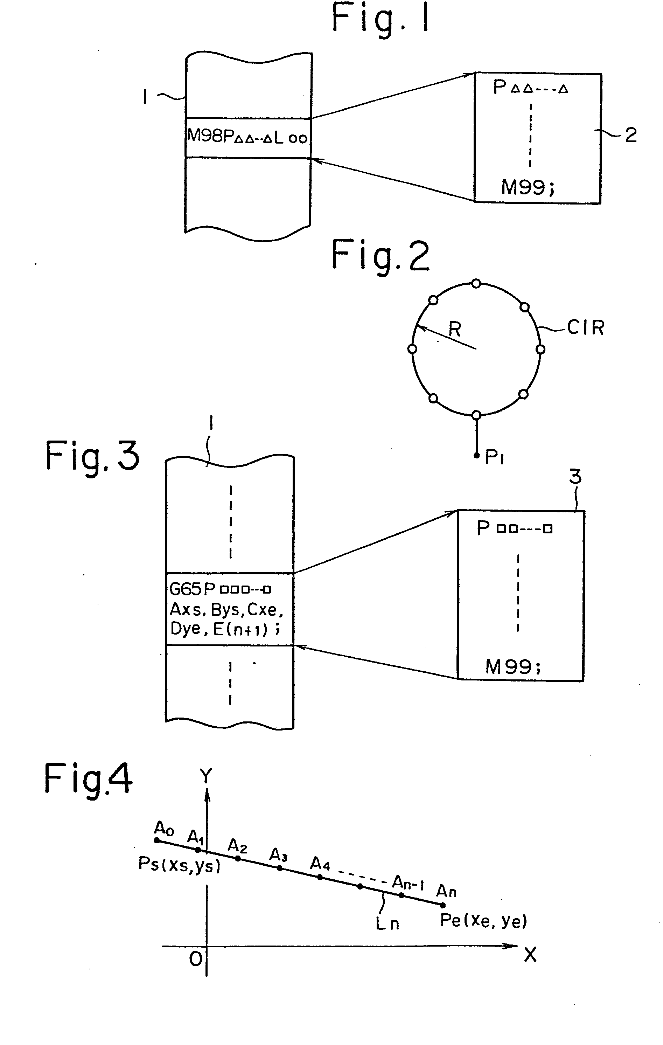

Fig. 1 is a diagram useful in describing the relation between an ordinary NC program (main program) and a subprogram. Numeral 1 denotes the ordinary NC program and numeral 2 the subprogram. It will be seen that a subprogram call instruction has been inserted in the NC program at a suitable location. The instruction is given by:

$$\text{M98 } P_\triangle \triangle \cdots \triangle \text{ L } \nabla\nabla ; \qquad \cdots \cdots \text{ (A)}$$

Here M98 indicates that the instruction is a subprogram call instruction, and the alphabetic character P is a word address which indicates that a numerical value following P is a program number. Further, $\triangle \triangle \cdots \triangle$ indicates the subprogram number, and L is a word address which specifies a number of repetitions. The subprogram 2, as shown in the example of Fig. 2, is programmed to bore eight equidistantly spaced bolt holes on the circumference of a circle of radius R starting from a point Pl. An instruction M99 is inserted at the end of the subprogram to effect the return to the NC program 1.

When the subprogram call instruction given by expression (A) shown above is read during the course of processing executed based on the NC program, the numerical control device calls the subprogram corresponding to the subprogram identification $P_\triangle \triangle \triangle \cdots \triangle$ and executes processing for the machining of the bolt holes shown in Fig. 2. After completing the machining processing, the NC device reads M99 and returns to processing based on the NC program 1.

Another processing method that is available makes use of a custom macro, which is one type of subprogram. Specifically, although the software for an NC device is designed for standard machine tool control, there are cases where special machine tool control is necessary depending upon the type of machine tool, or depending upon the particular user even for machine tools of the same kind. It would be convenient, therefore, if special processing, tailored to the user's needs, could be instructed by means of the NC program without effecting any change in software. A so-called custom macro processing method has been developed to satisfy this requirement and has been extremely successful in doing so. A custom macro is a function, composed of a group

-4-

of instructions, that is previously registered in memory just as a subprogram would be. The registered function is represented by a single instruction inserted in the numerical control program in advance, and the operation specified by the function is executed when the instruction, referred to as a macro call instruction, is eventually read from the numerical control program. The chief advantages of the custom macro are (a) unlike a subprogram, a custom macro can make use of variables, (b) arithmetic operations among the variables are possible, these being referred to as inter-variable calculations, and (c) the variables can be set to actual numerical values.

Fig. 3 is an explantory view useful in describing the relation between an ordinary numerical control (NC) program, indicated at numeral 1, and a custom macro shown at numeral 3. A macro call instruction has been inserted in the NC program at a suitable location. The instruction is given by:

$$G65 \ P\square \ \square \ \square \cdots \ \square \ Ax_s \ By_s \ Cx_e \ Dy_e \ E(n+1); \ . \ . \ . \ (B)$$

Here G65 indicates that the instruction is a macro call instruction, $P\square \ \square \ \square \cdots \square$ indicates the name, or identification, of the custom macro, and A, B, C, D and E are word addresses which specify the actual values of variables used in the custom macro $P\square \ \square \ \square \cdots \square$. The correspondence between a word address and a variable in the custom macro is stored beforehand in an internal memory of the numerical control apparatus. For example, A, B, C, D and E might correspond to variables #1, #2, #3, #7 and #9, respectively. The custom macro 3 is programmed using the variables #1, #2, #3, #7, #9, etc. for forming bolt holes in a workpiece at (n+1)-number of equidistantly spaced positions Ao, Al, A2,... An located on a straight line L connecting a starting point $P_s(x_s,y_s)$ and end point $P_e(x_e,y_e)$, as shown in Fig. 4. An instruction M99 is inserted at the end of the custom macro to effect the return to the NC program 1.

When the custom macro call instruction given by (B) shown above is read during the course of processing executed based on the NC program, the numerical control device calls the custom macro 3 corresponding to the custom macro identification P□ □ □...□ and executes processing for the machining of the bolt holes shown in Fig. 4 by setting the variables in the custom macro to the values specified in the call instruction, i.e., #1 = $x_s$, #2 = $y_s$, #3 = $x_e$, #7 = $y_e$, #9 = (n+1). After completing the machining processing, the NC device reads M99 and returns to processing based on the NC program 1. The actual numerical values for the variables can be specified by (a) using the abovementioned word addresses, or (b) assigning the numerical values to the variables directly by keying in numbers from a manual data input (MDI) unit.

Thus, NC machining processing conforming to predetermined patterns can be executed by previously registering a custom macro in a memory, and inserting the custom macro call instruction G65 in the NC program, followed by the custom macro identification and the values which specify the variables.

The latest NC devices most usually are of the type that rely upon the above-described memory mode of operation, and those that possess subprogram and user macro functions are increasing in number. The subprograms and custom macros are prepared by numerical control device and machine makers and are then stored in the internal memory of the NC device. The end user need not have detailed knowledge of the subprogram or custom macro content, but need only know the method of putting it to use. The creation of these subprograms and custom macros requires considerable labor and skill and is the fruit of know-how possessed by the maker, and it is often desired that the contents of a subprogram or user macro not be made public in order to prevent the unauthorized reproduction thereof. To this end, methods have been developed to prevent the stored data from being displayed or punched into a tape. If the memory storing the subprogram or custom macro is destroyed by an accident or malfunction, however, the only recourse is to write the same subprogram or custom macro into a newly provided memory from an input medium such as a paper tape. If the emphasis is on maintenance, therefore, then the end user will have to be provided with the subprogram or custom macro in the form of a tape. This will allow the end user to register the subprogram or custom macro in a replacement memory himself in the event that the original memory is destroyed, making it unnecessary for the NC device or machine maker to become involved whenever the stored data is destroyed. However, since a custom macro or subprogram tape is prepared in the same form as an ordinary part program, the tape is easy to decode, making it difficult to maintain the desired confidentiality. If emphasis is placed upon secrecy, then, rather than maintenance, the end user cannot be provided with the punched tape bearing the subprogram or macro, and the owner of the particular know-how will be compelled to proceed to the job site and restore the memory whenever there is a failure. The unfortunate result is a decline in the efficiency of maintenance.

According to one aspect of the present invention there is provided a numerical control method wherein a subprogram for execution of predetermined machining is stored beforehand in a memory located within a numerical control apparatus, a call instruction for calling the subprogram from the memory is inserted beforehand in a numerical control program, and numerical control processing is executed in accordance with the subprogram called by the call instruction, said method comprising steps of:

requesting that the subprogram be delivered to an external output unit;

enciphering the subprogram in response to the request for the delivery thereof; and

delivering the enciphered subprogram to the external output unit.

According to another aspect of the present invention there is provided a numerical control apparatus wherein a subprogram for execution of predetermined machining is stored beforehand in a memory, a call instruction for calling the subprogram from the memory is inserted beforehand in a numerical control program, and numerical control processing is executed in accordance with the subprogram called by the call instruction, said apparatus comprising:

means for requesting output of the subprogram;

means for enciphering the subprogram in response to the subprogram output request; and

output means for storing the enciphered subprogram in an external storage medium.

Accordingly, an embodiment of the present invention may provide a numerical control method and apparatus capable of meeting a requirement for both maintenance and security.

An embodiment of the present invention may provide a numerical control method and apparatus adapted to maintain security by enciphering a custom macro or subprogram, stored internally of an NC device, before the macro or subprogram can be delivered as an output to an external unit.

An embodiment of the present invention may provide a numerical control method and apparatus capable of improving maintenance by storing an enciphered custom macro or subprogram on an external storage medium such as a paper tape and providing the end user with said external storage medium.

An embodiment of the present invention may provide a numerical control method and apparatus wherein a custom macro or subprogram enciphered and stored on an external storage medium is loaded in an internal memory upon being deciphered.

An embodiment of the present invention may provide a numerical control method and apparatus wherein the name of a custom macro or subprogram which requires to be enciphered and delivered to an external storage medium is entered from an input unit and stored in memory beforehand, whereby only the custom macro or subprogram whose name has been entered is enciphered before delivery.

According to a preferred embodiment of the present invention, there may be provided a robot control system wherein a subprogram or custom macro for execution of prescribed machining or processing is stored previously in a memory, a call instruction for calling the subprogram or custom macro from the memory is inserted beforehand in a numerical control program, and numerical control processing is executed in accordance with the subprogram or custom macro called from memory. When the subprogram or custom macro stored in the memory is desired to be delivered to an external output unit, the data are first enciphered to prevent their decoding by end users. When a subprogram or custom macro stored in an external storage medium in enciphered form is desired to be registered in the memory, the data are deciphered before being stored in the memory.

Other features and advantages of / an embodiment of the present invention will be apparent from the following description taken in conjunction with the accompanying drawings, in which like reference characters designate the same or similar parts throughout the figures thereof.

Fig. 1 is a diagram showing the contents of an NC program which uses a subprogram;

Fig. 2 is diagram showing a pattern of bolt holes bored in accordance with a subprogram;

Fig. 3 is a diagram showing the contents of an NC program which uses a custom macro;

Fig. 4 is a graphical representation useful in describing the contents of a custom macro for boring holes along a straight line;

Fig. 5 is a block diagram illustrating an embodiment of an apparatus according to the present invention;

Fig. 6 is a block diagram illustrating another embodiment of an apparatus according to the present invention;

Fig. 7 is a flowchart illustrating registration processing according to the present invention; and

Fig. 8 is a flowchart illustrating enciphering processing according to the present invention.

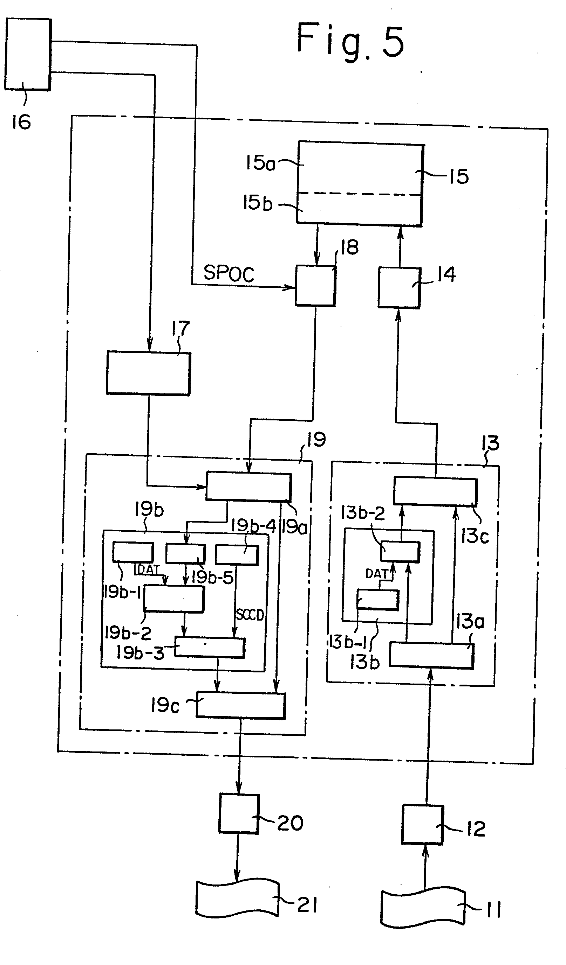

Reference will now be had to Fig. 5 to describe an embodiment of a numerical control apparatus according to the present invention. A paper tape 11 stores a custom macro or subprogram (referred to by the generic term "subprogram" when appropriate) in punched form. The subprogram is read by a tape reader 12 and the read data is fed into a discriminating unit 13a of an input circuit 13. The discriminating unit 13a determines whether the entered subprogram is in enciphered form; if it is, the subprogram is applied to a deciphering circuit 13b, if not, then the subprogram is applied directly to a gate circuit 13c. The determination that the subprogram is in enciphered form is based on a special code, inserted beforehand at the beginning of the subprogram, indicating the enciphered state. The deciphering circuit 13b includes a register 13b-1, in which a fixed item of predetermined eight-bit data DAT has been set, and a logic circuit 13b-2. Deciphering processing within the deciphering circuit 13b is performed by the logic circuit 13b-2 which takes the exclusive-OR between the eight bits of data DAT and the corresponding bits of one item of entered character data CD (composed of eight bits in accordance with EIA or ISO standards). Decipherment by taking the exclusive-OR between corresponding bits means that encipherment is performed by executing, in similar fashion, an exclusive-OR operation between the eight-bit set data DAT and each item of character data constituting the subprogram. The gate circuit 13c selectively applies the deciphered subprogram received from the deciphering circuit 13b, or the subprogram received directly from the discriminating unit 13a, to a write control unit 14 one character at a time, the latter writing the received subprogram into a subprogram storage area 15b of a memory 15. The memory 15 also has a storage area 15a storing one or more NC part programs, each of which has a program number. The subprogram storage area 15b is capable of storing a plurality of subprograms (inclusive of custom macros) through the above-described method. After storing subprograms in the storage area 15b, the identifications (names) of the subprograms the contents whereof are desired to be kept secret are entered from an MDI unit 16 (or other suitable means) and stored in a register 17.

When the operator sets a mode selection switch on an operator's panel (not shown) to the MEMORY MODE position, enters the program number of an NC part program using the MDI unit 16 and presses a CYCLE START button on the operator's panel, numerical control processing is executed in accordance with the NC data that starts to be read out of the part program storage area 15a of the memory 15 in block-by-block fashion from the beginning of the part program having the entered program number. The units which take part in executing the numerical control processing do not constitute part of the invention and, hence, are deleted from the drawings.

When the operator wishes to deliver subprograms from the subprogram memory 15b to an external storage medium such as a paper tape 21, the operator uses the MDI unit 16 to produce a subprogram output command SPOC that is applied to a read control circuit 18. The latter reads the custom macros or subprograms out of the storage area 15b of memory 15 in successive fashion and delivers them to a discriminating unit 19a of an output circuit 19. Each custom macro or subprogram will include an identification inserted at the beginning thereof. The discriminating unit 19a is operable to compare the read identification with the identifications stored in the register 17 and to deliver the custom macro or subprogram to an enciphering circuit 19b when the comparison operation indicates coincidence, or to a gate circuit 19c directly when coincidence is not detected. The enciphering circuit 19b enciphers the data input thereto in accordance with a predetermined rule and then delivers the enciphered data to the gate circuit 19c.

The enciphering circuit 19b includes a register 19b-1, in which the fixed item of predetermined eight-bit data DAT has been set, and a logic circuit 19b-2. Enciphering processing within the enciphering circuit 19b is performed by the logic circuit 19b-2 which takes the exclusive-OR between each bit of data DAT and the corresponding eight bits of each item of character data CD constituting a custom macro or subprogram. Prior to the enciphering operation, however, the enciphering circuit 19b produces a special code SCCD to indicate that the custom macro or subprogram to be delivered subsequently has been enciphered. More specifically, the enciphering circuit 19b includes an output unit 19b-3 for delivering a special code SCCD stored previously in a register 19b-4, and for then successively delivering the data enciphered in the above-described manner. The enciphering circuit 19 also includes a buffer register 19b-5 for buffering the data from the discriminating unit 19a before delivery to the logic circuit 19b-2. The gate circuit 19c selectively delivers the enciphered data from the output unit 19b-3, or the data from the discriminating unit 19a, to a paper tape puncher 20 which punches the data into a paper tape 21.

Assume that the memory 15 has failed and has been replaced by new memory, requiring the registration of custom macros and subprograms that were destroyed by failure of the memory.  The following is a description of the registration procedure, made up of steps (1) through (3).  We will assume that the custom macros and subprograms originally stored in the memory 15 were punched into the paper tape 21 when the memory 15 was still functioning properly.  These are the custom macros and subprograms which will now be registered in the newly replaced memory.  In actual practice, the NC maker will provide the end user with the paper tape bearing the punched custom macros and subprograms when the NC device is delivered.  The registration procedure is as follows:

(1)  The operator sets the paper tape 11 in the tape reader 12 and then presses a READ button on the MDI unit 16.  The tape reader 12 responds by reading the data from the tape 11 into the discriminating unit 13a in successive fashion.

(2)  The discriminating unit 13a, upon detecting the special code which indicates that a subprogram or custom macro is in enciphered form, sends the identification thereof as well as the subprogram or custom macro to the deciphering circuit 13b.  When no special code is detected, the discriminating unit sends the subprogram or custom macro to the gate 13c.

(3)  The deciphering circuit 13b deciphers any enciphered data input thereto and delivers the deciphered data, namely a subprogram or custom macro, to the gate 13c for storage in the storage area 15b of the memory 15.  This process is repeated to store all the desired subprograms and custom macros in the memory 15.

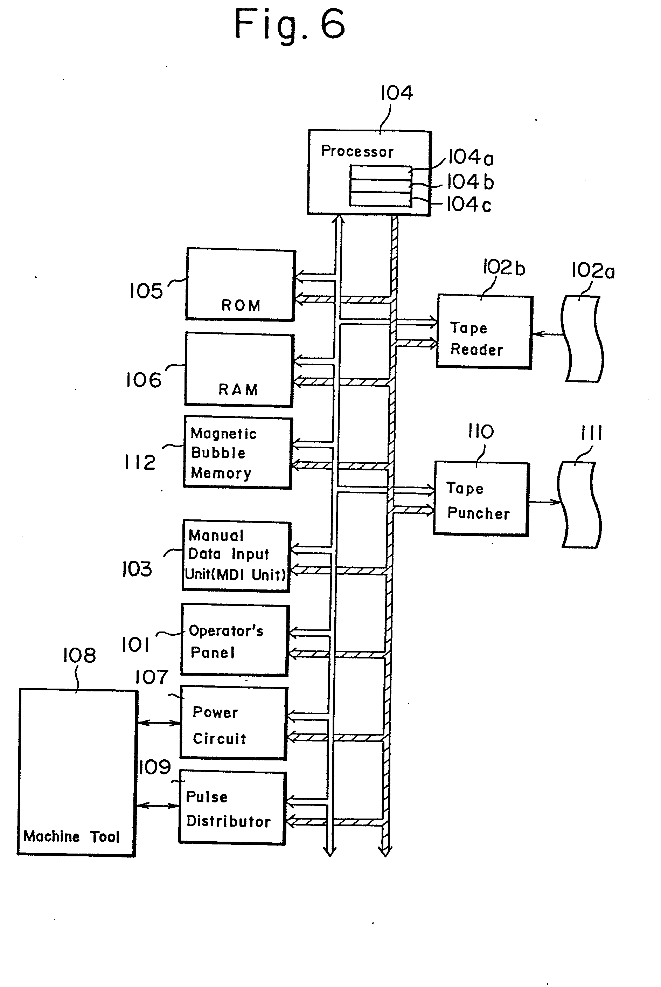

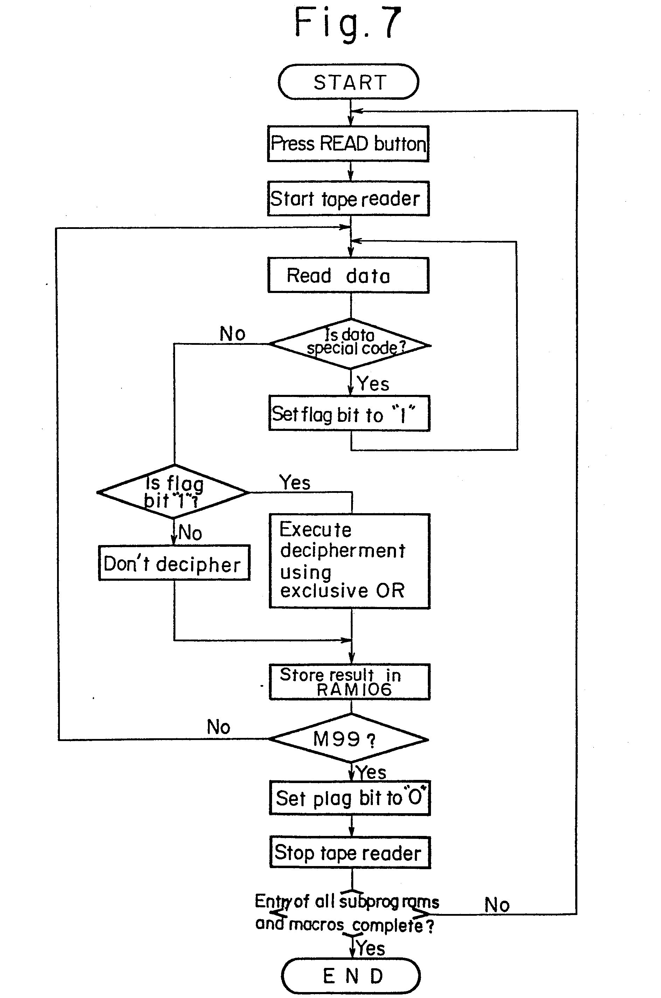

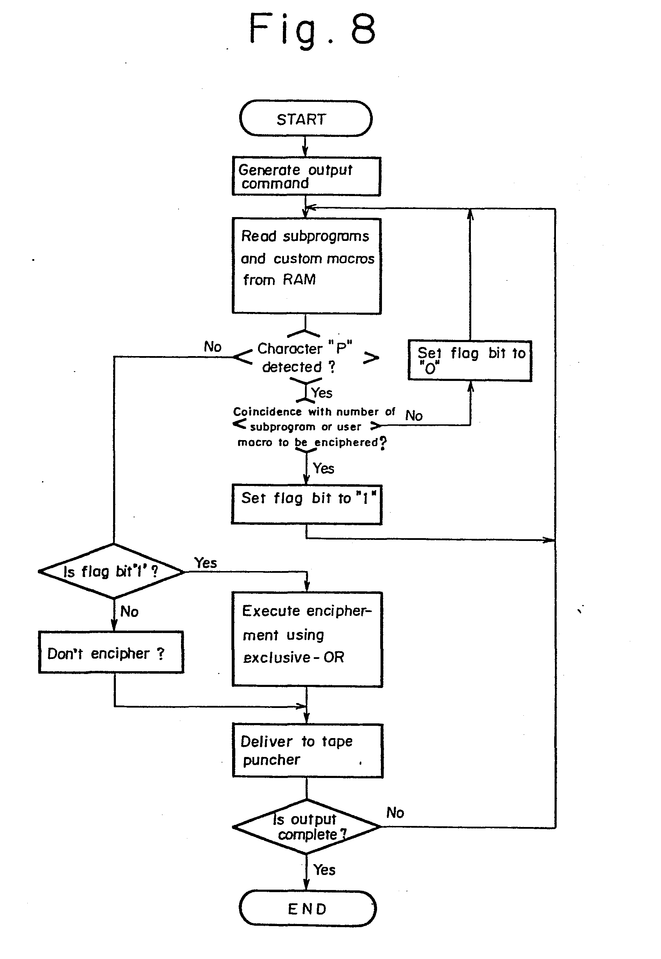

Fig. 6 is a block diagram of an embodiment wherein the present invention is applied to an NC device having the construction of a computer.  Fig. 7 is a flowchart for describing processing executed for the purpose of registering custom macros and subprograms in memory. Fig. 8 is a flowchart for describing enciphering.  The system includes an operator's panel 101 having a mode selection switch, not shown, a tape reader 102b and a manual data input unit (MDI) 103.  When the operator sets the mode selection switch to an edit mode or memory mode, loads an NC tape 102a having a plurality of punched custom macros and subprograms into the tape reader 102b and presses a read button on the MDI 103, the tape reader 102b reads the data from the NC tape 102a one character at a time.  A processor 104, under the control of a control program stored in a read-only memory (ROM) 105, reads in, character by character, the data acquired from the tape 102a via the tape reader 102b, and executes registration processing in accordance with the flowchart shown in Fig. 7.  The processing proceeds as follows:

(1)  The read data (one character) is discriminated to determine whether it is a special code indicating that a custom macro or subprogram is in enciphered form.

(2)    If the character data is not a special code, said data is stored in a RAM 106.

(3)    After storage, the three most recently stored characters, inclusive of the abovementioned character, are discriminated to determine whether said characters are M99, which indicates the end of a custom macro or subprogram.

(4)    If the three characters are not M99, then the next character data item is read and the foregoing steps (1) through (3) are repeated.

(5)    If the three most recently read characters are M99, the processor 104 stops the tape reader 102b.

(6)    Thereafter, the operator discriminates whether all of the subprograms and custom macros punched in the paper tape 102a have been registered in memory.

(7)    If all subprograms and custom macros have been registered, the registration processing ends; if not, the operator presses the read button on the MDI unit 103 to restart the taper reader 102b.

(8)    Meanwhile, if a read item of character data is found to be a special code as a result of the discrimination performed in step (1), then the processor 104 sets a flag bit to logical "1" in a general-purpose register 104a, reads in the next item of character data and stores it in a general-purpose register 104b.

(9)    After the next character is read in, the processor discriminates whether the flag bit is "1" or "0" [the result will be "YES" from step (8)]. When the flag bit is found to be "1", the processor executes processing (deciphering processing) to take the exclusive-OR between the eight-bit character data and the corresponding eight bits of a predetermined item of data set in a general-purpose register 104c within the processor. The result of the exclusive-OR operation is stored in the RAM 106.

(10) Next, the discrimination operation of step (3) is performed to determine whether the three most recently read characters are M99. If they are not, the next character is read in, followed by repetition of steps (9) and (10).

(11) If the three most recently read characters are M99, then the processor 104 sets the flag bit to "0", stops the tape reader and executes steps (6) and (7).

The foregoing completes the registration of the custom macros and subprograms. After the registration processing is completed, the operator goes to the MDI unit 103 and enters the numbers of the subprograms and custom macros he wishes to keep secret. These numbers are planted in the RAM 106.

When the foregoing operations are completed, the NC apparatus will be capable of performing the functions specified by the subprograms and custom macros.

In operation, assume that an NC program and custom macro have been registered in the RAM 106. The operator selects the memory mode by using the mode selection switch on the operator's panel, enters the number of the prescribed NC program using the MDI unit 103, and presses a start button on the operator's panel. When this is done, the processor 104 is instructed by the control program to go to the beginning of the NC program having the entered NC program number, read the NC data in block-by-block fashion from the beginning of the NC program and execute NC processing based on the NC data. When the NC data is an M-, S- or T-function instruction, the processor 104 sends a signal indicative of the instruction to a machine tool 108 through a power magnetics circuit 107. If the NC data is path data, the path followed by the movable element of the machine tool is controlled based on the path data. Assume that the commanded data is path data for cutting along a straight line, and that the commanded incremental values for such a cutting operation are given by Xi, Yi. The processor 104 proceeds to store these values in the RAM 106 as remaining amounts of movement XR, YR, respectively, and performs the following operations to compute X- and Y-axis amounts of movement $\Delta X$, $\Delta Y$ to be traversed during a predetermined length of time $\Delta T$:

$$\Delta X = Fx \cdot \Delta T \quad \ldots \ldots \ldots \quad (1)$$

$$\Delta Y = Fy \cdot \Delta T \quad \ldots \ldots \ldots \quad (2)$$

The values of $_\Delta X$ and $_\Delta Y$ are stored in a storage area of the RAM 106 and are fed into a pulse distributor 109. Note that the period of $_\Delta T$ in the foregoing equations is a quantity preset as a parameter. Further, Fx, Fy are the feed speeds along the X and Y axes, respectively, and are decided by the following equations in which F is the commanded feed speed:

$$Fx = F \cdot Xi/\sqrt{Xi^2 + Yi^2} \quad \ldots \ldots (3)$$
$$Fy = F \cdot Yi/\sqrt{Xi^2 + Yi^2} \quad \ldots \ldots (4)$$

Upon receiving the $_\Delta X$, $_\Delta Y$ inputs, the pulse distributor 109 executes a linear interpolation simultaneously along the X and Y axes. With each lapse of the time $_\Delta T$, the processor 104 computes values of $_\Delta X$, $_\Delta Y$ anew and accumulates the resulting values along the respective axes. In other words, the processor 104 executes the operations given by:

$$XA + {}_\Delta X \longrightarrow XA \quad \ldots \ldots (5)$$
$$YA + {}_\Delta Y \longrightarrow YA \quad \ldots \ldots (6)$$

to update the coordinates XA, YA of the current position occupied by the movable element of the machine tool, which coordinates are then stored in the RAM 106. The processor 104 also performs the following operations with each lapse of the time $_\Delta T$:

$$XR - {}_\Delta X \longrightarrow XR \quad \ldots \ldots (7)$$
$$YR - {}_\Delta Y \longrightarrow YR \quad \ldots \ldots (8)$$

to update the remaining amounts of movement stored in the RAM 106. When the processor 104 senses that the conditions $XR \geq {}_\Delta X$, $YR \geq {}_\Delta Y$ hold, namely that the remaining amounts of movement XR, YR along the X and Y axes are equal to or greater than the incremental values $_\Delta X$, $_\Delta Y$, respectively, $_\Delta X$, $_\Delta Y$ are applied to the pulse distributor 113. On the other hand, if it is sensed that the conditions XR < $_\Delta X$, YR < $_\Delta Y$ hold, then XR and YR are applied to the pulse distributor 113. The movable machine element is thus moved to the target position. When the element arrives at the target position (i.e. XR=0, YR=0), the processor 104 reads the next block of NC data out of the RAM 106 and then proceeds to execute control processing just as described above.

When a subprogram call instruction or custom macro call instruction is read after repeating the foregoing process steps, the processor 104 reads the NC data from the beginning of the called subprogram or custom macro, which is stored in the RAM 106, and executes NC processing in accordance with said data. At the conclusion of the processing specified by the subprogram or custom macro, the processor 104 reads the instruction "M99;" inserted at the end thereof and then resumes control processing based on the NC program data.

Assume now that the operator wishes to deliver a subprogram or custom macro to an external medium such as a paper tape. The operator places the tape puncher 110 in a punch enable state, sets the mode selection switch on the operator's panel 101 to the EDIT mode, and presses a subprogram output button located on the MDI unit 103. The processor 104 responds by successively reading custom macros and subprograms out of the RAM 106 and executes enciphering processing in accordance with the flowchart of Fig. 8. The process steps are as follows:

(1) First, the processor discriminates whether data read out of the RAM 106 is the alphabetic character P (where P is a word address indicating that the numerical value following P is a program number). If the character P is detected, then the processor discriminates whether the numerical value following P agrees with the number of a program, stored previously in the RAM 106, which is desired to be kept secret.

(2) When no agreement is detected, a flag bit is set to logical "0" and the read data is sent, without encipherment, directly to the tape puncher 110 to be punched into the paper tape 111. This operation continues until a confidential subprogram or custom macro is read.

(3) When the numerical value following the character P is found in step (1) to agree with the number of a program requiring secrecy, a flag bit in the first general-purpose register 104a of the processor 104 is set to "1", upon which the next item of data is read out of the RAM 106.

(4) Following the reading of the data, the processor discriminates whether the flag bit is "1" or "0". Since the result will indicate logical "1", the processor executes enciphering processing by taking the exclusive-OR between the eight-bit character data and the corresponding eight bits of a predetermined item of an eight-bit item of data set in the third general-purpose register 104c of the processor. The result of the exclusive-OR operation is delivered to the tape puncher 110 to be punched into the paper tape 111.

(5) Thereafter, items of character data are read successively out of the RAM 106, the reading of the data and the processing of step (4) being repeated until the alphabetic character P is read. When this occurs, control returns to step (1), after which the process steps (1) through (5) are executed until all subprograms and custom macros are punched into the paper tape 111.

It should be noted that NC programs, subprograms, custom macros, parameters (e.g., $\Delta T$) and numbers of subprograms and custom macros whose secrecy must be maintained, are stored in a magnetic bubble memory 112 as well, assuring their preservation in the event of a power failure or the like.

In accordance with the/present invention as embodiment of the described and illustrated hereinabove, the paper tape input and output circuits 13, 19 are provided with deciphering and enciphering functions, respectively, so that a custom macro or subprogram output onto a paper tape can not be readily decoded. This assures that the secrecy of confidential custom macros and subprograms will be maintained, even if paper tapes bearing the secret data are presented to the end user from the start. In the event of an accident which causes destruction of the memory or erasure of the stored data, the end user may employ the presented paper tapes to once again register the custom macros and subprograms in the memory following its replacement or repair. This feature                    enables restoration of the stored data in a very simple manner. According to the invention, therefore, secrecy can be maintained without sacrificing ease of maintenance.

As many apparently widely different embodiments of the present invention can be made without departing from the spirit and scope thereof, it is to be understood that the invention is not limited to the specific embodiments thereof except as defined in the appended claims.

In general terms there has been disclosed a          robot control system wherein a subprogram or custom macro for execution of prescribed machining or processing is stored previously in a memory (15b), a call instruction for calling the subprogram or custom macro from the memory (15b) is inserted beforehand in a numerical control program, and numerical control processing is executed in accordance with the subprogram or custom macro called from memory (15b).  When the subprogram or custom macro stored in the memory (15b) is desired to be delivered to an external output unit (20), the data are first enciphered by enciphering means (19b) to prevent their decoding by end users. When a subprogram or custom macro stored in an external storage medium (11) in enciphered form is desired to be registered in the memory (15b), the data are deciphered by deciphering means (13b) before being stored in the memory (15b).

Claims:

1.   A numerical control method wherein a subprogram for execution of predetermined machining is stored beforehand in a memory located within a numerical control apparatus, a call instruction for calling the subprogram from the memory is inserted beforehand in a numerical control program, and numerical control processing is executed in accordance with the subprogram called by the call instruction, said method comprising steps of:

   requesting that the subprogram be delivered to an external output unit;

   enciphering the subprogram in response to the request for the delivery thereof; and

   delivering the enciphered subprogram to the external output unit.

2.   The method according to claim 1, wherein the subprogram includes a custom macro.
                                              1 or
3.   The method according to claim /2, wherein      a plurality of subprograms are stored in the memory.

4.   The method according to claim 3, further comprising a step of entering the identification of a subprogram which requires enciphering, only a subprogram having the entered subprogram identification being enciphered before delivery to an external storage medium.
                                      any preceding
5.   The method according to claim,      further comprising a step of deciphering a subprogram stored in

-27-                    **0092977**

enciphered form in an external storage medium / before storage in the memory.

6.    A numerical control apparatus wherein a subprogram for execution of predetermined machining is stored beforehand in a memory, a call instruction for calling the subprogram from the memory is inserted beforehand in a numerical control program, and numerical control processing is executed in accordance with the subprogram called by the call instruction, said apparatus comprising:

means for requesting output of the subprogram;

means for enciphering the subprogram in response to the subprogram output request; and

output means for storing the enciphered subprogram in an external storage medium.

7.    The apparatus according to claim 6, wherein the subprogram includes a custom macro.

8.    The apparatus according to claim/7, further comprising:
6 or

means for entering an identification of a subprogram which requires enciphering, said subprogram being included among a plurality of subprograms stored in the memory;

means for storing the entered identification of the subprogram;

means for reading a subprogram out of the memory; and

means for comparing the entered subprogram identification with the identification of the subprogram read out of said memory for determining whether said identifications agree;

said enciphering means enciphering only a subprogram the identification whereof agrees with the entered subprogram identification.

9. The apparatus according to claim 7, 6, or 8, further comprising:

means for deciphering a subprogram stored in enciphered form in an external storage medium, and

means for storing the deciphered program in the memory.

10. The apparatus according to claim 9, further comprising means for discriminating whether a subprogram is stored in the external storage medium in enciphered form.

## Fig. 1

## Fig. 2

## Fig. 3

## Fig.4

# Fig. 5

# Fig. 6

# Fig. 7

```
        ┌─────────┐
        │  START  │
        └─────────┘
             │
    ┌──────────────────┐
    │ Press READ button│
    └──────────────────┘
             │
    ┌──────────────────┐
    │ Start tape reader│
    └──────────────────┘
             │
    ┌──────────────────┐
    │   Read  data     │
    └──────────────────┘
             │
          ╱Is data╲  No
         ╱ special  ╲────
         ╲  code?   ╱
          ╲        ╱
             │ Yes
    ┌──────────────────┐
    │ Set flag bit to "1"│
    └──────────────────┘

      ╱Is flag╲  Yes
     ╱ bit "1"? ╲────
      ╲        ╱
         │ No
  ┌──────────────┐    ┌──────────────┐
  │Don't decipher│    │  Execute     │
  └──────────────┘    │  decipherment│
                      │  using       │
                      │  exclusive OR│
                      └──────────────┘

    ┌──────────────────┐
    │ Store result  in │
    │     RAMIO6       │
    └──────────────────┘
             │
   No     ╱ M99 ? ╲
   ───────╲       ╱
             │ Yes
    ┌──────────────────┐
    │ Set plag bit to "O"│
    └──────────────────┘
             │
    ┌──────────────────┐
    │  Stop tape reader│
    └──────────────────┘
             │
  Entry of all subprograms    No
  and macros complete?  ───────
             │ Yes
        ┌─────────┐
        │  E N D  │
        └─────────┘
```

# Fig. 8

## EUROPEAN SEARCH REPORT

**0092977**
Application number

European Patent
Office

EP 83 30 2265

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | EP-A-0 078 326 (FANUC) * Abstract; page 4, lines 8-25; page 6, lines 18-23; page 10, line 16 - page 11, line 10; figures 2,3 * | 1-9 | G 05 B 19/405 G 09 C 1/10 |
| | --- | | |
| Y | US-A-3 683 513 (ANSTALT EUROPÄISCHE HANDELSGESELLSCHAFT) * Whole document * | 1-9 | |
| | ----- | | |

**TECHNICAL FIELDS SEARCHED (Int. Cl. 3)**

G 05 B 19/00
G 09 C 1/00

The present search report has been drawn up for all claims

| Place of search THE HAGUE | Date of completion of the search 20-07-1983 | Examiner RESSENAAR J.P. |
|---|---|---|